(19) **Europäisches Patentamt**
**European Patent Office**
**Office européen des brevets**

(11) **EP 1 972 770 B1**

(12) **EUROPEAN PATENT SPECIFICATION**

(45) Date of publication and mention
of the grant of the patent:
**10.04.2013 Bulletin 2013/15**

(51) Int Cl.:
*F02D 41/38* (2006.01)　　*F02D 41/40* (2006.01)

(21) Application number: **08250572.8**

(22) Date of filing: **19.02.2008**

(54) **Fuel injection control device, engine, and straddle type vehicle**

Kraftstoffeinspritzsteuervorrichtung, Motor und Grätschsitz-Fahrzeug

Dispositif de contrôle d'injection de carburant et véhicule de type à enfourcher

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.02.2007 JP 2007039259**

(43) Date of publication of application:
**24.09.2008 Bulletin 2008/39**

(73) Proprietor: **Yamaha Hatsudoki Kabushiki Kaisha
Shizuoka-ken Shizuoka 438-8501 (JP)**

(72) Inventors:
• **Tsuino, Yoshiaki
Shizuoka-ken 438-8501 (JP)**
• **Yamashita, Tomohisa
Shizuoka-ken 438-8501 (JP)**

(74) Representative: **Grünecker, Kinkeldey,
Stockmair & Schwanhäusser
Leopoldstrasse 4
80802 München (DE)**

(56) References cited:
**FR-A- 2 859 763　　　JP-A- 2000 257 478
US-A1- 2003 070 653**

**Description**

BACKGROUND

The present invention relates to a fuel injection control device for an engine of a straddle type vehicle including an in-cylinder injector for directly injecting fuel into a cylinder, and an engine and a straddle type vehicle including the fuel injection control device.

An engine including an in-cylinder injector for directly injecting fuel into a cylinder has been proposed for an engine for a four-wheeled motorized vehicle. In this engine, fuel in a fuel tank is pressurized to a high pressure by a high-pressure pump and supplied to the in-cylinder injector. With the engine including the in-cylinder injector, an engine output, fuel efficiency, and so forth can be improved comparing with an engine including in-pipe injector for injecting fuel into an intake pipe connected to the cylinder.

When a fuel injection is made to the in-cylinder injector, a required fuel amount is first calculated from an air amount inducted into the cylinder and a target air-fuel ratio. Then, an injection pulse width for operating the in-cylinder injector is calculated from the required fuel amount, fuel pressure acting on the in-cylinder injector, an ineffective injection period, and so forth. Here, it is important to obtain an accurate fuel pressure at a moment of injection to make an injection amount, which is actually injected, correspond to a required fuel amount.

Conventionally, a technique such that an average value (average fuel pressure) of fuel pressure in a predetermined period is used as fuel pressure for a calculation of an injection pulse width is known (see, for example, JP-A-2001-164973). In the technique disclosed in JP-A-2001-164973, a plurality of fuel pressures are sampled in a period equal to or longer than an operation cycle of the high-pressure pump. An average fuel pressure is calculated based on the sampled fuel pressures.

However, in the technique disclosed in JP-A-2001-164973, because a period for a calculation of an average fuel pressure becomes long, a response of calculated average fuel pressure tends to deteriorate especially when the engine is in a transient operational state. Therefore, in the case that the technique disclosed in JP-A-2001-164973 is applied to a motorcycle or the like, in which a wide range of engine speed is used and transient operation is highly frequent, a combustion condition tends to deteriorate in transient operation of the engine. Conversely, if an instantaneous value of fuel pressure, which is always changing, is used as it is, paying attention to the response, a combustion condition in a transient operation of the engine is improved. However, stability lowers and a combustion condition tends to deteriorate in normal operation especially in a high engine speed range.

US 2003/0070653 discloses a fuel injection control system and method for an internal combustion engine. The control system and method are capable of accurately determining a fuel injection period such that fuel pressure and fuel deposition are reflected therein to perform accurate control of the actual fuel injection amount.

JP 2000-257478 discloses a fuel injection control unit for a high-pressure fuel injection system which is able to react to changes in fuel pressure.

FR 2 859 763 relates to a management system for an internal combustion engine which can take account of the variable pressure of the combustion chamber.

The present invention seeks to realize an improvement of combustion in transient operation of the engine with improvement of combustion in normal operation at a high engine speed.

According to the present invention such object is solved by a fuel injection control device having the features of independent claim 1. Preferred embodiments are laid down in the dependent claims. Moreover, such object is also solved by a method of controlling fuel injection for an engine having the features of independent claim 22.

An embodiment provides a fuel injection control device for an engine that includes a cylinder, an in-cylinder injector for injecting fuel into the cylinder, a fuel pump for supplying fuel to the in-cylinder injector, and a fuel pressure detection device for detecting fuel pressure acting on the in-cylinder injector, and having an injection pulse width computing means for computing an injection pulse width of the in-cylinder injector, in which the injection pulse width computing means computes an injection pulse width based on fuel pressure detected by the fuel pressure detection device at a timing during the operation period of the fuel pump

In such a fuel injection control device, an instantaneous value of fuel pressure detected at a predetermined timing is used for a computation of an injection pulse width. Therefore, response of fuel pressure value used for a computation of an injection pulse width to change in fuel pressure is improved. Accordingly, fuel pressure value used for a computation of an injection pulse width tends to an actual fuel pressure value in transient operation of the engine, and thereby combustion in transient operation of the engine is improved. Also, an injection pulse width is computed using an instantaneous value of fuel pressure detected at a predetermined timing, and thereby combustion does not deteriorate in normal operation at a high engine speed.

Preferably, the fuel injection control device includes average fuel pressure calculating means for calculating an average fuel pressure from a plurality of fuel pressure detections made by the fuel pressure detection device, wherein the plurality of fuel pressure detections are made in a period shorter than an operation cycle of the fuel pump, in which the injection pulse width computing means computes an injection pulse width based on an average fuel pressure calculated by the average fuel pressure calculating means.

Such a fuel injection control device employs a period for a calculation of an average fuel pressure is shorter than an operation cycle of the fuel pump. As a result the calculated average fuel pressure response is improved and a calculated average fuel pressure tends to an actual fuel pressure in transient operation of the engine, and thereby combustion in transient operation of the engine is improved.

In an embodiment of the present invention a combustion condition in transient operation of the engine can be improved without deteriorating a combustion condition in normal operation at a high engine speed.

## BRIEF DESCRIPTION OF THE DRAWINGS

Embodiments of the invention are described, by way of example only, with reference to the accompanying drawings.

FIG. 1 is a side view of a motorcycle according to a first embodiment.
FIG. 2 is a block diagram of a drive system of the motorcycle shown in FIG. 1.
FIG. 3 is a view for schematically showing a peripheral construction of a cylinder in an engine and constructions of a fuel system and a control system of the engine.
FIG. 4 is a block diagram for showing a sensor group.
FIG. 5 is a view for showing a more specific construction of the fuel system.
FIG. 6 is a diagram for showing change in fuel pressure in a pressure accumulation chamber about time.
FIG. 7 is a flowchart for showing an average fuel pressure calculation process.
FIG. 8 is a flowchart for showing an injection pulse width computation process.
FIG. 9 is a flowchart for showing the injection pulse width computation process.
FIG. 10 is a flowchart for showing fuel pressure control process.
FIG. 11 is a diagram for showing change in fuel pressure detections according to a second embodiment.
FIG. 12 is a flowchart for showing the average fuel pressure calculation process according to the second embodiment.
FIG. 13 is a flowchart for showing the average fuel pressure calculation process according to a third embodiment.
FIG. 14 is a diagram for showing a timing of fuel pressure detection according to a fourth embodiment.

## DETAILED DESCRIPTION

Hereinafter, embodiments of the present invention will be described in detail with reference to drawings.

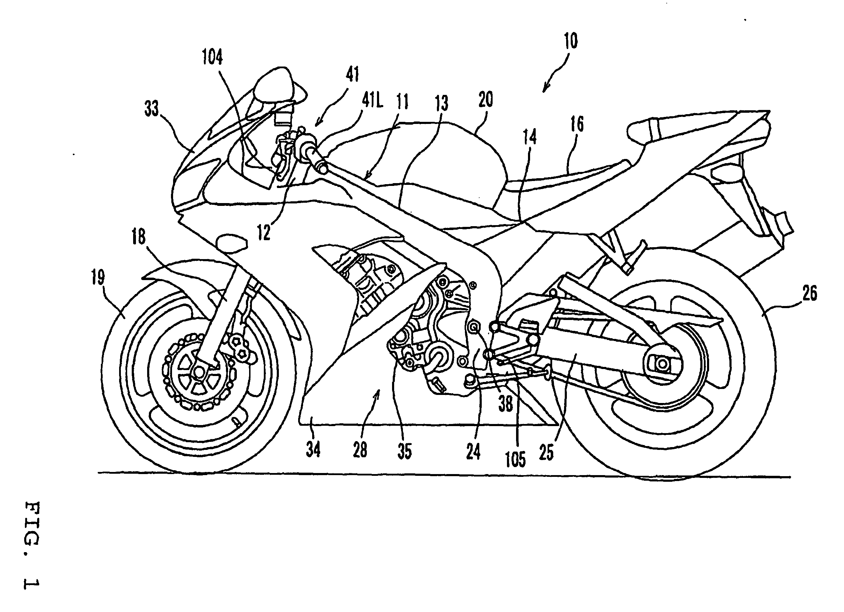

A first embodiment is described in the context of a vehicle shown in FIG. 1 in the form of a motorcycle 10. The motorcycle 10 includes a vehicle body frame 11 constructing a skeletal structure, and a seat 16, on which a rider (driver) sits. A rider sits on the seat 16 and rides on the vehicle straddling the vehicle body frame 11. In the present invention, a form of the vehicle is not limited to the vehicle shown in FIG. 1 (a so-called motorcycle type), but can be a so-called moped type vehicle. The highest speed, a displacement, a size and so forth of the vehicle are not limited either. Further, the vehicle is not limited to a motorcycle, but can be another straddle type vehicle such as a four-wheeled buggy.

In the descriptions hereinafter, front, rear, right, and left directions are the directions in the view of a rider sitting on the seat 16. The vehicle body frame 11 includes a steering head pipe 12, a mainframe 13 extending rearward obliquely downward from the steering head pipe 12, and right and left seat rails 14 extending rearward obliquely upward from midway parts of the main frame 13.

A front wheel 19 is supported by the steering head pipe 12 via a front fork 18. A fuel tank 20 and the seat 16 are supported on the seat rails 14. The seat 16 extends from the rear of the fuel tank 20 toward rear ends of the seat rails 14.

A right and left pair of rear arm brackets 24 is provided at rear ends of the mainframe 13.

The rear arm brackets 24 protrude downward from the rear ends of the mainframe 13. A pivot shaft 38 is provided on the rear arm brackets 24. A front end of a rear arm 25 is swingably supported by the pivot shaft 38. A rear wheel 26 is supported at a rear end of the rear arm 25.

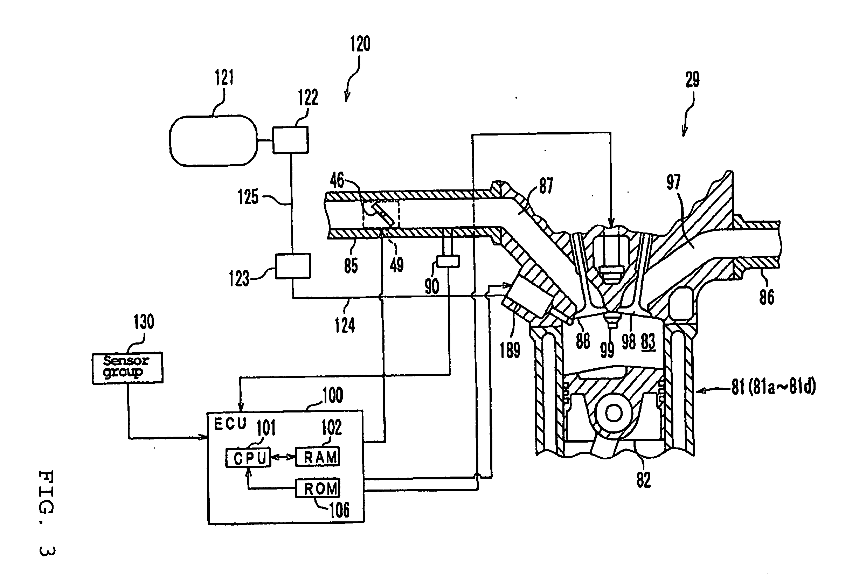

An engine unit 28 for driving the rear wheel 26 is supported by the vehicle body frame 11. The mainframe 13 supports a crankcase 35 hanging down therefrom. In addition, in this embodiment, the engine unit 28 includes an engine 29 (see FIG. 3), which is a gasoline engine. However, the engine is not limited to this example, the engine unit 28 can include an engine, in which a gasoline engine and a motor (e.g., an electric motor) engine are combined.

The motorcycle 10 includes a front cowl 33 and right and left leg shields 34. The leg shields 34 are cover members for covering the legs of a rider from the front side.

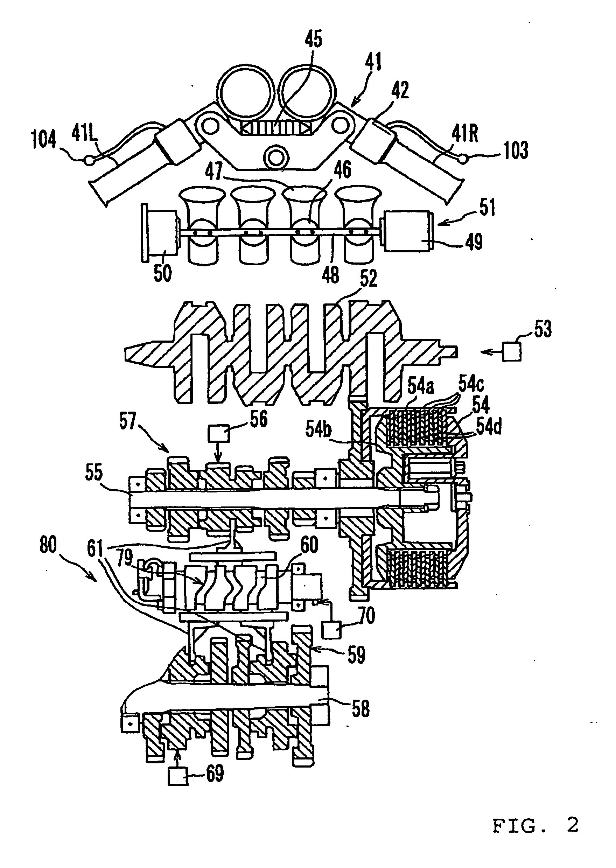

Although not shown in FIG. 1, a brake pedal is provided in a lower part on the right side of the motorcycle 10. The mentioned brake pedal is for braking the rear wheel 26. The front wheel 19 is braked by operating a brake lever 103 (see FIG. 2) provided in a vicinity of a right grip 41R (see FIG. 2) of handlebars 41. A clutch lever 104 is provided in a vicinity of a left grip 41L of the handlebars 41. A clutch 54 (see FIG. 2) is engaged or disengaged by operation of the clutch lever 104. Further, a gear change pedal 105 is provided in a lower part on the left side of the motorcycle 10. A gear change is made in a transmission 80 (see FIG. 2) by operation of the gear change pedal 105.

FIG. 2 is a block diagram of a drive system of the motorcycle 10 shown in FIG. 1. The right grip 41R of the handlebars 41 (see FIG.1 also) constructs an accelerator grip. The accelerator grip is provided with an accelerator input sensor 42. The accelerator input sensor 42 detects an operation amount (accelerator operation amount) of the right grip 41R by a rider. An indicator 45 for indicating a present gear position is provided on a center part of the handlebars 41. In this embodiment, a shift position can be increased or decreased between the neutral position and the sixth position, which is the highest gear position by operating the gear change pedal 105 (see FIG. 1).

A throttle valve 46 is put on a throttle 47 constructing an intake passage. A throttle actuator 49 is provided on a right end of a valve shaft 48 of the throttle valves 46. Also, a throttle opening sensor 50 is provided on a left end of the valve shaft 48. An electric control throttle device 51 is constructed with the right grip 41R as the accelerator grip, the throttles 47, the throttle actuator 49, and the throttle opening sensor 50. This embodiment is not limited to the motorcycle 10 including the electric control throttle device 51, but the motorcycle 10 can include a wire type throttle, in which the throttle valve 46 is operated by a wire.

An engine speed sensor 53 for detecting an engine speed is provided on the right side of a right end of a crankshaft 52 of the engine 29 (see FIG. 3). The engine speed sensor 53 generates a crank pulse every predetermined angle rotation (45° in this embodiment) of the crankshaft 52. The engine speed sensor 53 is the crank pulse generating device in the present invention. The crankshaft 52 is connected to a main shaft 55 via a wet type multiple disc clutch 54. The clutch 54 includes a clutch housing 54a and a clutch boss 54b. A plurality of friction plates 54c is mounted on the clutch housing 54a. Also, a plurality of clutch plates 54d is mounted on the clutch boss 54b. Each of the clutch plates 54d is disposed between the adjoining friction plates 54c, 54c. Distances between the friction plates 54c and the clutch plates 54d change due to operation of the clutch lever 104, and thereby the clutch 54 is engaged or disengaged. Multi-position transmission gears 57 are put on the main shaft 55, and a main shaft rotational speed sensor 56 is provided thereon also. Each of the transmission gears 57 put on the main shaft 55 engages with a transmission gear 59 put on a drive shaft 58. The drive shaft 58 is disposed in parallel to the main shaft 55. In FIG. 2, for the convenience of description, the transmission gears 57 and the transmission gears 59 are separately shown.

Among those transmission gears 57 and the transmission gears 59 except for the selected gears, either one set of gears or both the sets of gears are put on the main shaft 55 and/or the drive shaft 58 in an idling state. Therefore, a transmission of drive force from the main shaft 55 to the drive shaft 58 is made via only a selected pair of the transmission gears. A state that a pair of the transmission gears 57 and 59 are engaged together in a state that drive is transmitted from the main shaft 55 to the drive shaft 58 is a gear-connection state.

An action such that a gear change is made by selecting the transmission gear 57 and the transmission gear 59 is made by a shift cam 79. A plurality (three in FIG. 2) of cam grooves 60 is formed on the shift cam 79. A shift fork 61 is put on each of the cam grooves 60. The shift forks 61 respectively engage with the predetermined transmission gears 57 and 59 of the main shaft 55 and the drive shaft 59. The shift cam 79 rotates, and thereby the shift forks 61 move in the axial direction along the cam grooves 60. Linking with the movements of the shift forks 61, the predetermined transmission gears 57 and 59 spline-fitted to the main shaft 55 and the drive shaft 58 move in the axial directions. The transmission gears 57 and 59 moved in the axial directions engage with other transmission gears 57 and 59 put on the main shaft 55 and the drive shaft 58 in an idling state, and thereby a gear change is made. The transmission 80 is constructed with those transmission gears 57 and 59, and the shift cam 79.

A vehicle speed sensor 69 is provided on the drive shaft 58. Further, a gear position sensor 70 for detecting a gear position (rotational speeds of the shift cam) is provided on the shift cam 79.

FIG. 3 is a view for schematically showing a peripheral construction of a cylinder 81 in the engine 29 and constructions of a fuel system and a control system of the engine 29. The engine 29 according to this embodiment is a four-cylinder engine including four cylinders 81a through 81d. A construction of each of the cylinders is similar to each other. Hereinafter, the cylinder will be referred as the "cylinder 81" in the representative descriptions for those cylinders. FIG. 3 shows one cylinder 81 of those four cylinders 81, and its inside and its peripheral construction.

A piston 82 is reciprocally housed in the cylinder 81 of the engine 29. A combustion chamber 83 is formed with an upper surface of the piston 82 and an inner wall surface of the cylinder 81.

An intake pipe 85 and an exhaust pipe 86 are connected to the cylinder 81. The intake pipe 85 is communicatively connected to the combustion chamber 83 via an intake port 87. An intake valve 88 for varying a communicative connection state between the intake pipe 85 and the combustion chamber 83 by opening or closing is disposed in the intake port 87. An in-cylinder injector 189 for supplying fuel into the cylinder 81 is provided in the cylinder 81. In this embodiment, a direct injection (in-cylinder injection) of fuel into the cylinder 81 is made by the in-cylinder injector 189.

An intake pipe pressure sensor 90 for detecting a pressure in the intake pipe 85 (intake pipe pressure) is provided at a downstream part (a part close to the cylinder 81) of the throttle valve 46 (see FIG. 2 also) in the intake pipe 85. In addition, the intake pipe pressure sensor 90 may be provided in the intake port 87 for detecting a pressure in the intake port 87.

The exhaust pipe 86 is connected to the combustion chamber 83 via an exhaust port 97. An exhaust valve 98 for varying a communicative connection state between the exhaust pipe 86 and the combustion chamber 83 by opening or closing is disposed in the exhaust port 97. An ignition plug 99 for igniting a fuel-air mixture formed with fuel and air is disposed in an upper part of the combustion chamber 83.

The engine 29 includes a fuel system 120 for supplying fuel to the in-cylinder injector 189. The fuel system 120 includes a fuel tank 121, a low-pressure pump 122, a high-pressure pump 123, a high-pressure fuel pipeline 124, and a low-pressure fuel pipeline 125.

The low-pressure pump 122 is connected to the fuel tank 121. The low-pressure pump 122 draws fuel in the fuel tank 121, and pumps the drawn fuel to the high-pressure pump 123 via the low-pressure fuel pipeline 125.

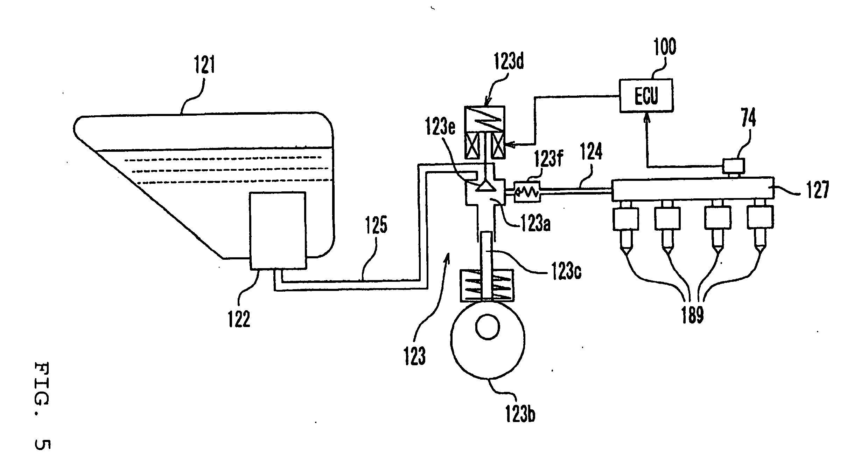

The high-pressure pump123 is connected to the low-pressure pump 122 mentioned above. The high-pressure pump 123 further pressurizes the fuel pumped by the low-pressure pump 122. The high-pressure fuel pressurized by the high-pressure pump 123 is supplied to the in-cylinder injector 189 via the high-pressure fuel pipeline 124. A detailed construction of the high-pressure pump 123 will be described with reference to FIG. 5 below.

A fuel injection by the in-cylinder injector 189 is controlled by an ECU (Engine Control Unit) 100 connected to the in-cylinder injector 189. The ECU 100 is connected to the ignition plug 99, and controls an ignition by the ignition plug 99. Further, the ECU 100 controls operation of the throttle actuator 49 (see FIG. 2 also).

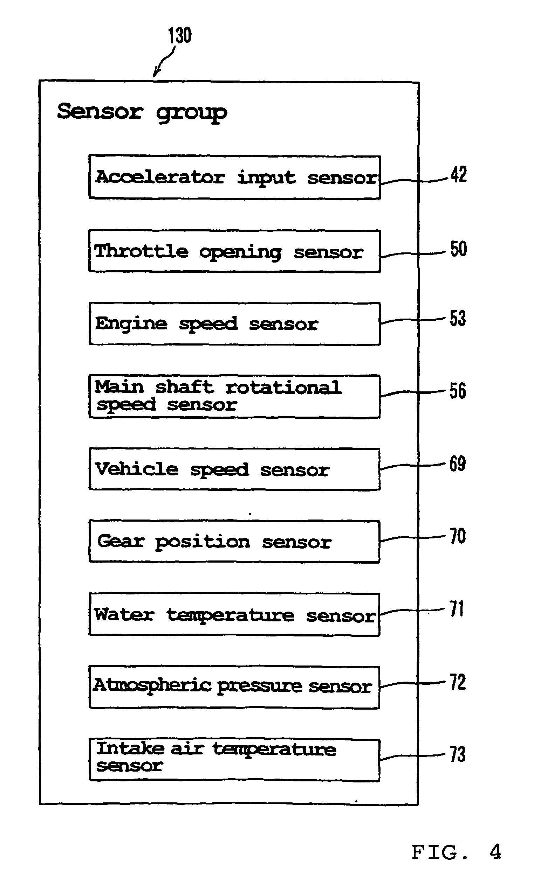

The intake pipe pressure sensor 90 mentioned above is connected to the ECU 100 as an input system. Also, a sensor group 130 is connected to the ECU 100 as another input system. As shown in FIG. 4, the sensor group 130 is configured with the accelerator input sensor 42, the throttle opening sensor 50, the engine speed sensor 53, the main shaft rotational speed sensor 56, the vehicle speed sensor 69, the gear position sensor 70 (see FIG. 2 also), a water temperature sensor 71, an atmospheric pressure sensor 72, and an intake air temperature sensor 73. The water temperature sensor 71 detects a water temperature of coolant of the engine 29. The atmospheric pressure sensor 72 detects an atmospheric pressure. Further, the intake air temperature sensor 73 detects a temperature of air flowing into the intake pipe 85. A detection result of each of those sensors 42, 50, 53, 56, 69, 70, 71, 72, and 73 is input to the ECU 100.

As shown in FIG. 3, the ECU includes a CPU 101, a RAM 102, a ROM 106, input and output busses, and so forth. The CPU 101 decompresses required program and data, among programs and data stored in the ROM 106, in the RAM 102 and operates each kind of process.

An engine control program is stored in the ROM 106. The engine control program is a program for controlling operation of each device such as the throttle actuator 49, the in-cylinder injector 189, and the ignition plug 99 (see FIG. 3), and is a program for controlling operation of the entire engine 29.

FIG. 5 is a view for showing a more specific construction of the fuel line system 120 shown in FIG. 3. As shown in FIG. 3, the high-pressure pump 123 is connected to the fuel tank 121 via the low-pressure pump 122 and the low-pressure fuel pipeline 125. The high-pressure pump 123 includes a pump chamber 123a, in which fuel is filled, a plunger 123c reciprocally moving up and down, and a solenoid valve 123d for adjusting a fuel amount supplied to the pump chamber 123a.

The pump chamber 123a is filled with fuel pumped from the low-pressure pump 122. The plunger 123c is driven by a pump cam 123b and reciprocally moves up and down in the pump chamber 123a. The pump cam 123b is mounted on a camshaft (not shown). The camshaft is connected to the crankshaft 52 (see FIG. 2) via a drive chain (not shown). Therefore, a rotation of the pump cam 123b synchronizes with a revolution of the engine 29 (a rotation of the crankshaft 52).

The solenoid valve 123d is constructed with a solenoid. The solenoid valve 123d includes a spill valve 123e for opening or closing a part, which is an entrance for fuel. A check valve 123f is provided in a connection part with the high-pressure fuel pipeline 124 in the pump chamber 123a. The check valve 123f opens if fuel pressure in the pump chamber 123a exceeds a predetermined value or a pressure in the high-pressure fuel pipeline.

The solenoid valve 123d is connected to the ECU 100 (see FIG. 3 also), and is opened or closed responding to a control signal from the ECU 100. The solenoid valve 123d pushes the spill valve 123e down while not energized, and this results in a valve opening state that the fuel tank 121 and the pump chamber 123a are communicatively connected. While the solenoid valve 123d is energized, the solenoid valve 123d pulls the spill valve 123e up, and this results in a blocking state that the fuel tank 121 and the pump chamber 123a are not communicatively connected. FIG. 5 shows the valve opening state of the spill valve 123e.

The plunger 123c mentioned above reciprocally moves in the pump chamber 123a driven by the pump cam 123b, and thereby fuel in the pump chamber 123a is pressurized to a high pressure. If fuel pressure in the pump chamber 123a exceeds a predetermined value or a pressure in the high-pressure fuel pipeline, the check valve 123f opens, and thereby fuel in the pump chamber 123a is supplied into a pressure accumulation chamber 127 via the high-pressure fuel pipeline 124. The pressure accumulation chamber 127 is also called a discharge pipe. High-pressure fuel supplied to the pressure accumulation chamber 127 is injected from the in-cylinder injector 189. The engine 29 according to this embodiment is a four-cylinder engine, and thus, as shown in FIG. 5, includes four in-cylinder injectors 189 for injecting fuel to an inside of each of the four cylinders 81.

A fuel pressure sensor 74 for detecting fuel pressure in the pressure accumulation chamber 127 is provided in the pressure accumulation chamber 127. Fuel pressure in the pressure accumulation chamber 127 is fuel pressure acting on the in-cylinder injector 189. The fuel pressure sensor 74 corresponds to the fuel pressure detection device in the present invention. The fuel pressure sensor 74 is connected to the ECU 100. Fuel pressure detected by the fuel pressure sensor 74 is input to the ECU 100.

As described above, the high-pressure pump 123 pressurizes fuel by reciprocal movements of the plunger 123c to pump the fuel to the high-pressure fuel pipeline 124. Specifically, first, the plunger 123c falls while the spill valve 123e is open, and thereby fuel from the fuel tank 121 is filled into the pump chamber 123a. Thereafter, the solenoid valve 123d is energized while the plunger 123c is rising, and the spill valve 123e closes. When the spill valve 123e closes, fuel pressure in the pump chamber 123a increases due to a rise of the plunger 123c. When fuel pressure in the pump chamber 123a exceeds a predetermined value, the check valve 123f opens, and fuel is supplied to the in-cylinder injector 189 via the high-pressure fuel pipeline 124 and the pressure accumulation chamber 127. When the check valve 123f opens and fuel in the pump chamber 123a is supplied to the pressure accumulation chamber 127, fuel pressure in the pressure accumulation chamber 127 increases responding to a rise of the plunger123c, and then becomes equal to the fuel pressure in the pump chamber 123a.

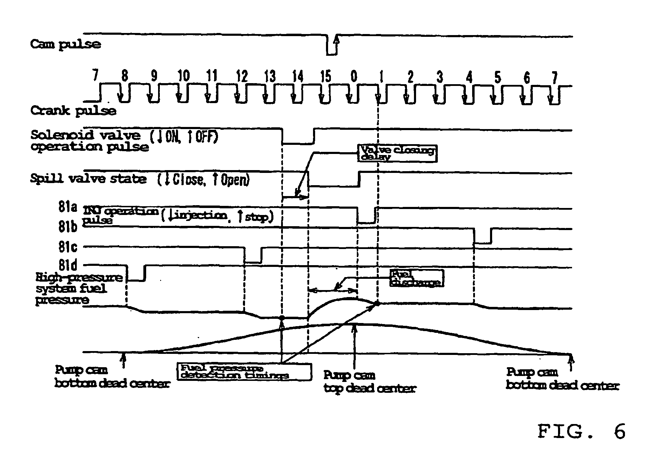

FIG. 6 is a view for showing change in fuel pressure in the pressure accumulation chamber 127 about time while an in-cylinder injection is made into each of the cylinders 81. FIG. 6 shows change in fuel pressure in one period (cycle) that the pump cam 123b (see FIG. 5) moves from a bottom dead center to a top dead center, and thereafter returns to the bottom dead center.

As shown in FIG. 6, fuel pressure in the pressure accumulation chamber 127 largely rises immediately after the spill valve 123e closes and discharge of fuel to the pressure accumulation chamber 127 by the high-pressure pump 123 starts. Fuel pressure in the pressure accumulation chamber 127 becomes the largest when the pump cam 123b reaches the top dead center. Discharge of fuel by the high-pressure pump 123 finishes at this point.

After the pump cam 123b reaches the top dead center, an in-cylinder injection into the cylinder 81 is made in order of the cylinder 81a, 81b, 81d and 81c. In this period, fuel pressure in the pressure accumulation chamber 127 is the largest when the pump cam 123b reaches the top dead center, and decreases stepwise by each in-cylinder injection into the cylinder 81. After the in-cylinder injection into the fourth cylinder 81c, the spill valve 123e closes, and again discharge of fuel by the high-pressure pump 123 is made. As shown in FIG. 6, a certain degree of delay (valve closing delay) occurs in a period between an operation pulse provided to the solenoid valve 123d is generated and the spill valve 123e actually closes.

As described above, the engine speed sensor 53 (see FIG. 2) generates a crank pulse every predetermined angle rotation (45°) of the crankshaft 52. FIG. 6 shows the crank pulse. As shown in FIG. 6, in this embodiment, while a crank pulse is generated sixteen times, that is, while the crankshaft rotates twice, the pump cam 123b rotates once.

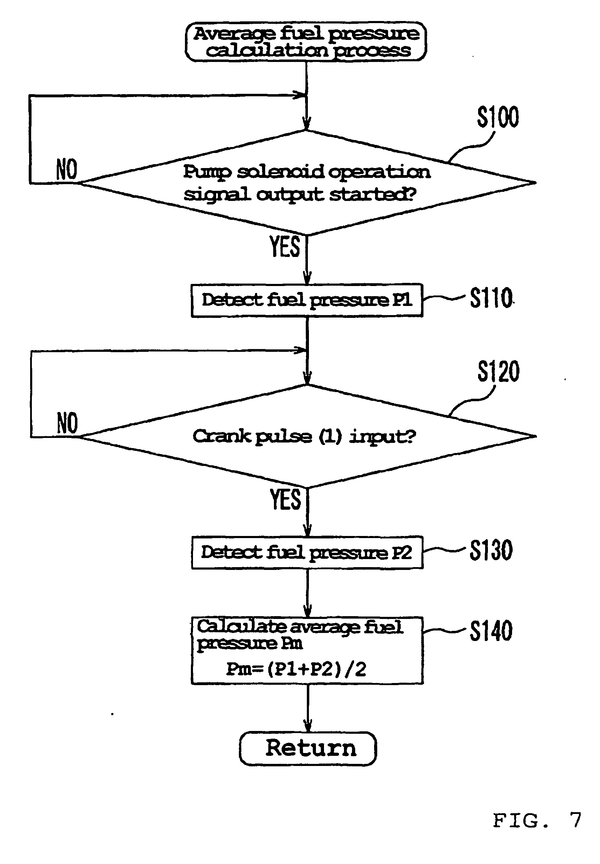

Next, an average fuel pressure calculation process for calculating an average fuel pressure of the pressure accumulation chamber 127 will be described with reference to FIG. 7. In the motorcycle 10 according to this embodiment, the average fuel pressure is used in a computation of a fuel injection period (injection pulse width) of the in-cylinder injector 189. Also, in this embodiment, the average fuel pressure is used in feedback control on fuel pressure so that fuel pressure of the pressure accumulation chamber 127 is predetermined target fuel pressure.

In this embodiment, as shown in FIG. 6, in a calculation of the average fuel pressure, fuel pressure before and after discharge of fuel by the high-pressure pump 123, that is, before and after a rise of fuel pressure of the pressure accumulation chamber 127 are detected, and an average value of the fuel pressure at those two points is calculated.

When the average fuel pressure calculation process shown in FIG. 7 started, first in step S100, a determination is made about if an output of an operation pulse to the solenoid valve 123d (see FIG. 5) is started or not. In this process, the ECU 100 determines if an output of an operation pulse for closing the solenoid valve 123d is started or not. The operation pulse is corresponds to the control valve operation pulse in the present invention. In the case that an output of an operation pulse is not started, the ECU 100 returns the process to step S100, and waits until the operation pulse is output. As shown in FIG. 6, the point that an output of an operation pulse starts is before discharge of fuel by the high-pressure pump 123.

In the case that the ECU 100 determines that an output of an operation pulse to the solenoid valve 123d is started in step S100, fuel pressure P1 is detected in step S110. In this process, the ECU 100 detects fuel pressure P1 by the fuel pressure sensor 74 at the timing that an output of an operation pulse is started.

After the process of step S110 is executed, a determination is made about if a predetermined crank pulse is input or not in step S120. In this process, the ECU 100 determines if a crank pulse given with code 1 (crank pulse (1)) among a plurality of crank pulses shown in FIG.6 is input or not. The crank pulse (1) is a crank pulse generated immediately after discharge of fuel by the high-pressure pump 123.

Here, as shown in FIG. 6, a cam pulse is generated every one rotation of the camshaft connected to the crankshaft 52 via the drive chain. While the camshaft rotates once, the crankshaft 52 rotates twice, and thus the cam pulse is generated every two rotations of the crankshaft 52 (see FIG. 2). In step S120, the ECU 100 determines that the crank pulse (1) is input when a second crank pulse is input after the cam pulse is input.

If the ECU 100 determines that the crank pulse (1) is not input in step S120, the process is returned to step S120. Meanwhile, if determined that the crank pulse (1) is input, fuel pressure P2 is detected in step S130. In this process, the ECU 100 detects fuel pressure P2 by the fuel pressure sensor 74 at a timing that the crank pulse (1) is input.

After the process in step S130 is executed, an average fuel pressure Pm is calculated in step S140. In this process, the ECU 100 calculates the average fuel pressure Pm in a manner such that a sum of fuel pressure P1 detected by the process in step S110 and fuel pressure P2 detected by the process in step S130 is divided by two. After the process in step S140 is executed, an average fuel pressure calculation process is finished. In executing the average fuel pressure calculation process shown in FIG. 7, the ECU 100 functions as the average fuel pressure calculating means in the present invention.

As described in FIGs. 6 and 7, in this embodiment, a calculating period of average fuel pressure (average fuel pressure calculating period) is a period between start of an output of an operation pulse of the solenoid valve 123d and the input of the crank pulse (1). The average fuel pressure calculating period is a period shorter than a cycle of the high-pressure pump 123.

Here, as mentioned above, if the average fuel pressure calculating period is a period equal to or longer than a cycle of the high-pressure pump 123, it deteriorates response of an average fuel pressure to change in fuel pressure in transient operation of the engine. Therefore, calculated average fuel pressure is apt to be off an actual fuel pressure in transient operation of the engine, a combustion condition deteriorates in transient operation of the engine.

However, in this embodiment, the average fuel pressure calculating period is a period shorter than a cycle of the high-pressure pump 123, and thus response of the average fuel pressure to change in fuel pressure is improved. Therefore, calculated average fuel pressure is not apt to be off an actual fuel pressure in transient operation of the engine, and a combustion condition in transient operation of the engine is improved.

Also, in this embodiment, in a calculation of the average fuel pressure, fuel pressure at two points before and after discharge of fuel by the high-pressure pump 123, and the average value of fuel pressure at those two points is calculated. In this case, the average fuel pressure can be calculated by a simple computation such that a sum of fuel pressure at two points is divided by two, and thus a load to the CPU 101 (see FIG. 3) can be reduced.

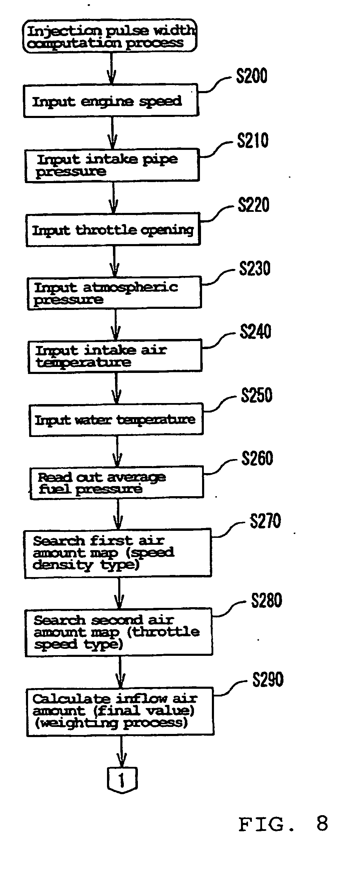

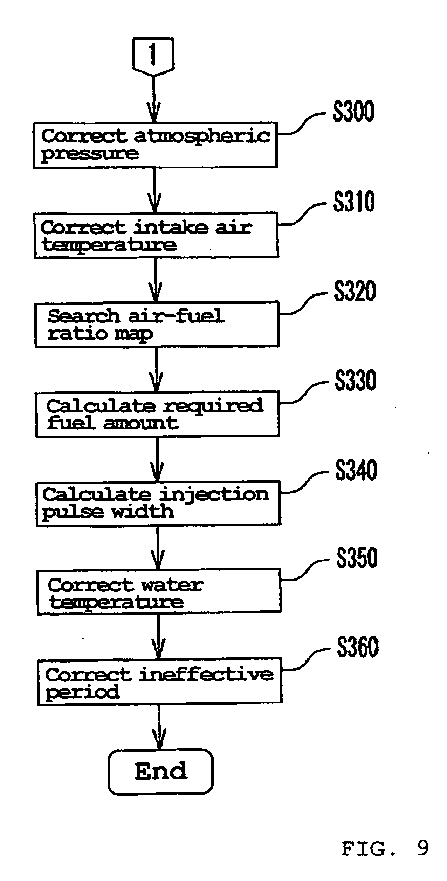

Next, descriptions will be made about an injection pulse width computation process for computing a fuel injection period (injection pulse width) of the in-cylinder injector 189 using the average fuel pressure calculated by the average fuel pressure calculation process shown in FIG. 7 with reference to FIGs. 8 and 9. In this process, generally, a required fuel amount of the in-cylinder injector 189 is computed first. Thereafter, an injection pulse width of the in-cylinder injector 189 is computed based on the computed required fuel amount and the average fuel pressure and so forth calculated by the above average fuel pressure calculation process.

After the injection pulse width computation process starts, first, each of engine speed, an intake pipe pressure, a throttle opening, an atmospheric pressure, an intake air temperature, and a water temperature is input in steps S200 through S250 in FIG. 8. In this process, the ECU 100 inputs each output result of the engine speed sensor 53 (see FIG. 4), the intake pipe pressure sensor 90 (see FIG. 3), the throttle opening sensor 50, the atmospheric pressure sensor 72, the intake air temperature sensor 73, and the water temperature sensor 71 (see FIG. 4).

After the process of step S250 is executed, the average fuel pressure is read out in step S260. In this process, the ECU 100 reads out the average fuel pressure calculated by the average fuel pressure calculation process shown in FIG. 7 and stored in the RAM 102 and so forth.

After the process of step S260 is executed, a first air amount map is searched in step S270. The first air amount map is a map used in obtaining an inflow air amount into the intake pipe 85 from an engine speed and an intake pipe pressure. Such a map providing a relationship between engine speed, intake pipe pressure and inflow air amount is generally called a speed density type map.

In step S270, the ECU 100 searches the first air amount map, and obtains an inflow air amount corresponding to an engine speed input by the process of step S200 and an intake pipe pressure input by the process of step S210.

After the process of step S270 is executed, a second air amount map is searched in step S280. The second air amount map is a map used in obtaining an inflow air amount into the intake pipe 85 from an engine speed and a throttle opening. Such a map providing a relationship between engine speed, throttle opening and inflow air amount is generally called a throttle speed type map.

In step S280, the ECU 100 searches the second air amount map, and obtains an inflow air amount corresponding to an engine speed input by the process of S200 and a throttle opening input by the process of step S220.

The inflow air amounts obtained in steps S270 and S280 are provisional values. Those two provisional values are weighted in a process in step S290 described below. Inflow air amounts obtained by the weighting are used in a calculation for a required fuel amount.

After the process of step S280 is executed, a provisional value of inflow air amount obtained in each of steps S270 and S280 is weighted in step S290, and thereby final values of inflow air amounts are calculated. The weighting corresponds to a throttle opening. Specifically, as a throttle opening becomes larger, a proportion of a provisional value obtained by the process of step S270 is made smaller, and a proportion of a provisional value obtained by the process of step S280 is made larger. Conversely, as a throttle opening becomes smaller, a proportion of a provisional value obtained by the process of step S270 is made larger, and a proportion of a provisional value obtained by the process of step S280 is made smaller.

After the process of step S290 is executed, an atmospheric pressure is corrected in step S300 in FIG. 9. In this process, the ECU 100 makes a predetermined correction process corresponding to an atmospheric pressure value input by the process of step S230 to an inflow air amount calculated by the process of step S290.

After the process of step S300 is executed, an intake air temperature is corrected in step S310. In this process, the ECU 100 makes a predetermined correction corresponding to an intake air temperature input by the process of step S240 to the inflow air amount after an atmospheric pressure is corrected by the process of step S300.

After the process of step S310 is executed, an air-fuel ratio map is searched in step S320. The air-fuel ratio map is a map used in obtaining a target air-fuel ratio from an engine speed and a throttle opening. In step S320, the ECU 100 searches the air-fuel ratio map, and obtains a target air-fuel ratio corresponding to an engine speed input by the process of step S200 and a throttle opening input by the process of step S220.

After the process of step S320 is executed, a required fuel amount is calculated in step S330. In this process, the ECU 100 calculates a required fuel amount based on a target air-fuel ratio obtained by the process of step S320 and an inflow air amount calculated by the process of step S310 (an inflow air amount after a correction process).

After the process of step S330 is executed, an injection pulse width is calculated in step S340. In this process, the ECU 100 makes a predetermined computation using a required fuel amount calculated in step S330 and the average fuel pressure read out by the process of step S260, and thereby calculates a fuel injection period (injection pulse width) of the in-cylinder injector 189.

In the process of step S340, injection pulse widths are calculated for all the in-cylinder injectors 189 relating to each of the four cylinders 81. That is, in this embodiment, an average fuel pressure read out by the process of step S260 is used in computing injection pulse widths relating to all the four cylinders 81. Therefore, an injection amount of fuel into each of the cylinders 81 is not apt to change, and thereby a combustion condition is improved.

After the process of step S340 is executed, a water temperature is corrected in step S350. In this process, the ECU 100 makes a predetermined correction process corresponding to a water temperature input by the process of step S250 to an injection pulse width of the in-cylinder injector 189 calculated in step S340.

After the process of step S350 is executed, an ineffective period is corrected in step S360. In this process, the ECU 100 makes a predetermined correction process in consideration of an ineffective period (a delay until a fuel injection starts after an operation pulse is provided to the in-cylinder injector 189) to an injection pulse width after a water temperature is corrected by the process of step S350. After the process of step S360 is executed, the injection pulse width computation process is finished. In executing the injection pulse width computation process shown in FIGs. 8 and 9, the ECU 100 functions as the injection pulse width computing means.

In this embodiment, as mentioned above, the average fuel pressure calculating period is a period shorter than one cycle of the high-pressure pump 123, and thus response of an average fuel pressure to change in fuel pressure is improved. Therefore, calculated average fuel pressure is not apt to be off an actual fuel pressure in transient operation of the engine. Accordingly, an injection amount in a fuel injection based on an injection pulse width finally computed after the processes of steps S340 through 360 is not apt to be off a required fuel amount computed by the process of step S330. As a result, a combustion condition is improved in transient operation of the engine.

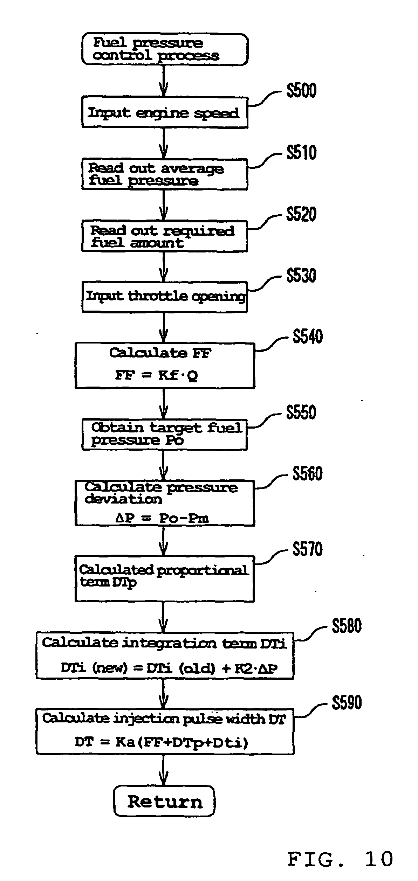

Next, descriptions will be made about fuel pressure control process for making a feedback control on fuel pressure using an average fuel pressure calculated by the average fuel pressure calculation process shown in FIG. 7 with reference to FIG. 10. In the fuel pressure control process, in addition to the feedback control, a feedforward control on fuel pressure is controlled. In the fuel pressure control process, generally, a feedforward term is calculated based on a required fuel amount first, and a feedback term is calculated based on an average fuel pressure and predetermined target fuel pressure. Thereafter, operation of the high-pressure pump 123 is controlled based on a sum of the calculated feedforward term and the feedback term, and fuel pressure in the pressure accumulation chamber 127 is controlled.

After the fuel pressure control process starts, first, an engine speed is input in step S500. In this process, the ECU 100 inputs a detection result of the engine speed sensor 53 (see FIG. 2).

After the process of step S500 is executed, an average fuel pressure is read out in step S510. In this process, the ECU 100 reads out fuel pressure calculated by the average fuel pressure calculation process shown in FIG. 7 and stored in the RAM 102 and so forth.

After the process of step S510 is executed, a required fuel amount is read out in step S520. In this process, the ECU 100 reads out a required fuel amount calculated by the process of step S330 and stored in the RAM 102 and so forth.

After the process of step S520 is executed, a throttle opening is input in step S530. In this process, the ECU 100 inputs an output result of the throttle opening sensor 50 (see FIG. 2).

After the process of step S530 is executed, a feedforward term FF is calculated in step S540. The feedforward term is a value, which determines a contribution rate of a feedforward control to an operation pulse width in a calculation of the operation pulse width in operating (operation for opening) the solenoid valve 123d. In this process, the ECU 100 calculates a feedforward term FF as a product Kf·Q of a predetermined feedforward coefficient Kf and a product Q of a required fuel amount read out by the process step S520 and a number of the cylinders (four in this embodiment).

After the process of step S540 is executed, a target fuel pressure Po is obtained in step S550. In this process, the ECU 100 obtains a target fuel pressure Po by searching a target fuel pressure map stored in the ROM 106 and so forth. The target fuel pressure map is a map proving a relationship between throttle opening, engine speed, and target fuel pressure Po. In the process of step S550, the ECU 100 obtains a target fuel pressure Po corresponding to an engine speed input by the process of step S500 and a throttle opening input by the process of step S530 from the target fuel pressure map.

After the process of step S550, a pressure deviation ΔP is calculated in step S560. The pressure deviation ΔP is a difference between a target fuel pressure Po and an average fuel pressure Pm. In this process, the ECU 100 calculates a difference between a target fuel pressure Po obtained by the process of step S550 and average fuel pressure Pm calculated by the average fuel pressure calculation process shown in FIG. 7 as a pressure deviation ΔP.

After the process of step S560 is executed, a proportion term DTp, which is a partial term of the feedback term, is calculated in step S570. A feedback term is a value, which determines a contribution rate of a feedback control to an operation pulse width in a calculation of the operation pulse in operating (operation for closing) the solenoid valve 123d. In this process, the ECU 100 calculates a product of a predetermined coefficient K1 and a pressure deviation ΔP calculated by the process of step S560 as a proportion term DTp.

After the process of step S570 is executed, an integration term DTi, which is a partial term of a feedback term, is calculated in step S580. In this process, the ECU 100 calculates a present integration term DTi (DTi (new)) by a below equation (1) using an integration term DTi (DTi (old)) calculated by the process of previous step S580, a predetermined coefficient K2, and a pressure deviation ΔP calculated by the process of step S560.

$$\text{DTi (new) = DTi (old) + K2·ΔP} \qquad \text{Equation (1)}$$

After the process of step S580 is executed, an operation pulse width DT in operating (operation for closing) the solenoid valve 123d in step S590. In this process, the ECU 100 calculates an operation pulse width DT by a below equation (2) based on a feedforward term FF calculated by the process of step S540, a feedback term (DTp + DTi), which is a sum of a proportion term DTp calculated by the process of step S570 and an integration term DTi calculated by the process of step S580, and a predetermined correction coefficient Ka. The correction coefficient Ka is determined corresponding to an engine speed. After the process of step S590 is executed, the fuel pressure control process is finished. In executing the fuel pressure control process shown in FIG. 10, the ECU 100 functions as the fuel pressure controlling means in the present invention.

$$\text{DT = Ka (FF + DTp + DTi)} \qquad \text{Equation (2)}$$

In this embodiment, as described above, the average fuel pressure calculating period is a period shorter than a cycle of the high-pressure pump 123, and thus response of an average fuel pressure to change in fuel pressure is improved. Therefore, calculated average fuel pressure is not apt to be off an actual fuel pressure at a high engine speed. Accordingly, when a feedback control is made based on a difference between a target fuel pressure and an average fuel pressure in the fuel pressure control process shown in FIG. 10, fuel pressure in the pressure accumulation chamber 127 can be appropriately approximated to a target fuel pressure.

As described in the foregoing, in this embodiment the average fuel calculating period is a period shorter than a cycle of the high-pressure pump 123, and thus response of an average fuel pressure to change in fuel pressure is improved. Therefore, calculated average fuel pressure is not apt to be off an actual fuel pressure and tends to correspond to an actual fuel pressure, in transient operation of the engine. Accordingly, a fuel injection amount in a fuel injection by the in-cylinder injector 189 based on an injection pulse width calculated with an average fuel pressure is not apt to be off a required fuel amount, and tend to correspond to a required fuel amount. As a result, a combustion condition in transient operation of the engine is improved.

Also, in the motorcycle 10 according to the embodiment, an average fuel pressure is not apt to be off an actual fuel pressure, and tends to correspond to an actual fuel pressure, and thus fuel pressure in the pressure accumulation chamber can be appropriately approximated to a target fuel pressure when a feedback control is made based on a difference between a target fuel pressure and an average fuel pressure.

Also, in the example of a motorcycle 10 according to the embodiment, fuel pressure before and after a rise of fuel pressure of the pressure accumulation chamber 127 are detected, and an average fuel pressure is calculated based on the fuel pressure at those two points. As foregoing, an average fuel pressure is calculated by sampling fuel pressure in periods before and after discharge of fuel, in which change in fuel pressure is large, and thereby calculated average fuel pressure can be a reliable value (a difference from an actual fuel pressure is small).

Also, in the example of a motorcycle 10 according to this embodiment, in a calculation of an average fuel pressure, fuel pressure at two points before and after fuel discharge by the high-pressure pump 123 are used, and an average value of the fuel pressure at those two points is calculated. In this case, an average fuel pressure can be calculated by a simple computation that a sum of fuel pressure at two points is divided by two. As a result, a load to the CPU 101 can be reduced.

In the example of a motorcycle 10 according to this embodiment, calculated average fuel pressure is used in computing injection pulse widths relating to all the four cylinders 81. Therefore, a fuel injection amount into each of the cylinders 81 does not tend to change, and thus a combustion condition in normal operation at a high engine speed is improved.

In this embodiment, the engine 29 is a four-cylinder engine including the four cylinders 81. However, a number of the cylinders is not limited to a specific number in the present invention. For example, the engine may be a two-cylinder engine, or a six-cylinder engine.

Also, in this embodiment, calculated average fuel pressure is used in computing injection pulse widths relating to all the four cylinders 81. However, the present invention is not limited to this case, but calculated average fuel pressure may be used in computing injection pulse widths relating to at least the two cylinders 81 among a plurality of the cylinders 81.

In the present invention, the average fuel pressure calculating period is not limited to the period (see FIG. 6) described in the first embodiment if it is a period shorter than a cycle of the high-pressure pump 123. In the first embodiment, an average is calculated using fuel pressure at two points before and after discharge by the high-pressure pump 123. However, in an embodiment of the present invention, a frequency of sampling of fuel pressure for an average calculation is not limited to two times, but can be three times or more. In a second embodiment described hereinafter, the average fuel pressure calculating period is longer than the case of the first embodiment, and a frequency of sampling of fuel pressure is greater than the case of the first embodiment. Further, in the second embodiment, a weighted average is calculated based on detected fuel pressure in the average fuel pressure calculation process.

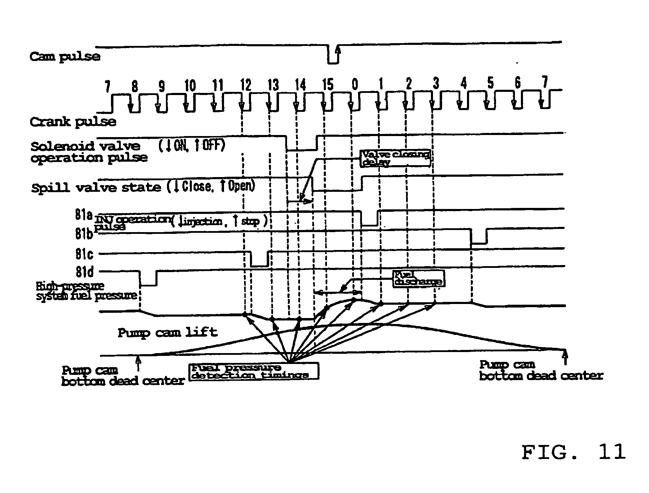

FIG. 11 is a diagram for showing change in fuel pressure in the pressure accumulation chamber 127 and timings of fuel pressure detections. As shown in FIG. 11, in the second embodiment, fuel pressure is detected at each of timings that crank pulses (12) through (15) and (0) through (3) are generated. That is, a frequency of sampling of the fuel pressure is eight times. In the second embodiment, the average fuel pressure calculating period is longer than the case of the first embodiment, but is shorter than a cycle of the high-pressure pump 123. Therefore, similarly to the case of the first embodiment, it realizes an effect that a combustion condition is improved in transient operation of the engine.

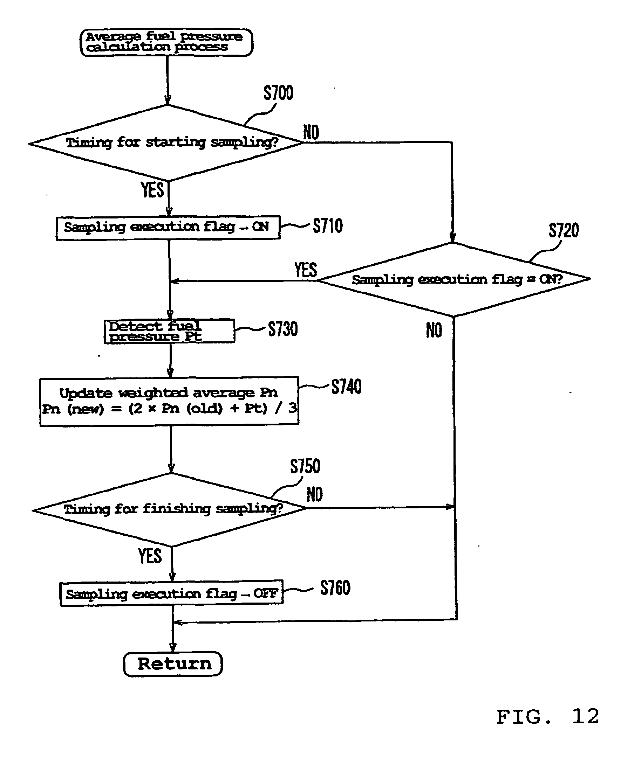

FIG. 12 is a flowchart for showing the average fuel pressure calculation process according to the second embodiment. In an example of motorcycle according to the second embodiment, since the constructions of the motorcycle and the processes other than shown in FIGs. 11 and 12 are similar to the example of a motorcycle 10 according to the first embodiment, descriptions of those will not be repeated. The average fuel pressure calculating process is executed every time when the ECU 100 inputs a crank pulse.

After the average fuel pressure calculation process shown in FIG. 12 starts, first, a determination is made about if it is a timing for starting sampling or not in step S700. In this process, the ECU 100 determines if an input crank pulse is a crank pulse for starting a detection of fuel pressure (crank pulse (12) shown in FIG. 11) or not.

If it is determined that it is a timing for starting sampling in step S700, a sampling execution flag is set ON in step S710. If the sampling execution flag is ON, it means that a present time is within the average fuel pressure calculating period.

Meanwhile, if it is determined that it is not a timing for starting sampling in step S700, a determination is made about if a sampling execution flag is set ON or not in step S720. If determined that the flag is not set ON (being OFF), the average fuel pressure calculation process is finished.

If it is determined that a sampling execution flag is set ON in step S720, or if the process of step S710 is executed, fuel pressure Pt is detected in step S730. In this process, the ECU 100 detects fuel pressure Pt by the fuel pressure sensor 74 (see FIG. 5).

After the process of step S730 is executed, a weighted average Pn is updated in step S740. In this process, the ECU 100 updates a weighted average Pn by calculating a present weighted average Pn (Pn (new)) by a below equation (3) using a weighted average Pn (Pn (old)) calculated by the process of previous step S740 and fuel pressure Pt detected by the process of step S730.

$$Pn\ (new) = (2 \times Pn\ (old) + Pt)\ /\ 3 \qquad Equation\ (3)$$

After the process of step S740 is executed, a determination is made about if it is a timing for finishing sampling or not in step S750. In this process, the ECU 100 determines if an input crank pulse is a crank pulse for finishing a detection of fuel pressure (crank pulse (3) shown in FIG. 11) or not. If it is determined that it is not a timing for finishing sampling, the average fuel pressure calculation process is finished.

Meanwhile, if it is determined that it is a timing for finishing sampling in step S750, the average fuel pressure calculating period ends. a sampling execution flag is set OFF in step S760. A weighted average Pn at the moment that it is determined to be a timing for finishing sampling is average fuel pressure used for the injection pulse width computation process (see FIGs. 8 and 9) and the fuel pressure control process (see FIG. 10). After the process of step S760 is executed, the average fuel pressure calculation process is finished.

As described with FIG. 12, in this embodiment, a weighted average is updated by using the above equation (3) every time that a predetermined crank pulse is generated. In this case, since average fuel pressure can be calculated by a relatively simple computation, a load to CPU 101 can be reduced. Also, because it is a computation method that a weighted average is updated every generation of a crank pulse, a buffer domain can be small.

In the above second embodiment, a weighted average based on detected fuel pressure is calculated, and thereby an average fuel pressure is calculated. However, in a third embodiment hereinafter, weighted average calculation is not used, but an average fuel pressure is calculated by uniform averaging in which each term is not weighted.

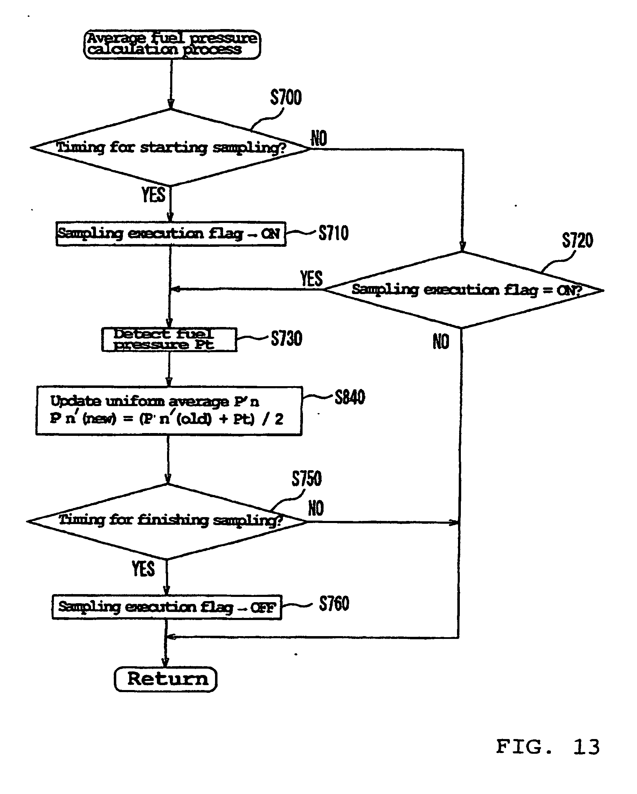

FIG. 13 is a flowchart for showing the average fuel pressure calculation process according to the third embodiment. In an example of a motorcycle according to the third embodiment, since the constructions of the motorcycle and the processes other than shown in FIG. 12 are similar to the motorcycle 10 according to the second embodiment, descriptions of those will not be repeated. The average fuel pressure calculation process is executed every time that the ECU 100 inputs a crank pulse.

Difference between the average fuel pressure calculation process shown in FIG. 13 and the average fuel pressure calculation process shown in FIG. 12 is the point that the process of step S740 in FIG. 12 is changed to a process of step S840 in FIG. 13. In the process of step S840, a uniform average Pn' is updated. In this process, the ECU 100 updates a uniform average Pn' by calculating a present uniform average Pn' (Pn' (new)) by a below equation (4) using a uniform average Pn' calculated by the process of previous step S840 (Pn' (old)) and fuel pressure Pt detected by the process of step S730.

$$Pn'\ (new) = (Pn'\ (old) + Pt)\ /\ 2 \qquad Equation\ (4)$$

As described with FIG. 13, in this embodiment, a uniform average is updated by using the above formula (4) every time that a predetermined crank pulse is generated. In this case, similarly to the second embodiment, since an average fuel pressure can be calculated by a relatively simple computation, a load to the CPU 101 can be reduced. Also, it is a computation method that a uniform average is updated every generation of a crank pulse, a buffer domain can be small.

In the first through third embodiments described above, an average fuel pressure is calculated using a plurality of fuel pressure in the average fuel pressure calculating period. A computation of an injection pulse width and a feedback control on fuel pressure are made based on the average fuel pressure. Differently, in a fourth embodiment described hereinafter, an average fuel pressure is not used, but a computation of an injection pulse width and a feedback control on fuel pressure are made based on fuel pressure detected at a predetermined timing, that is, an instantaneous value of fuel pressure.

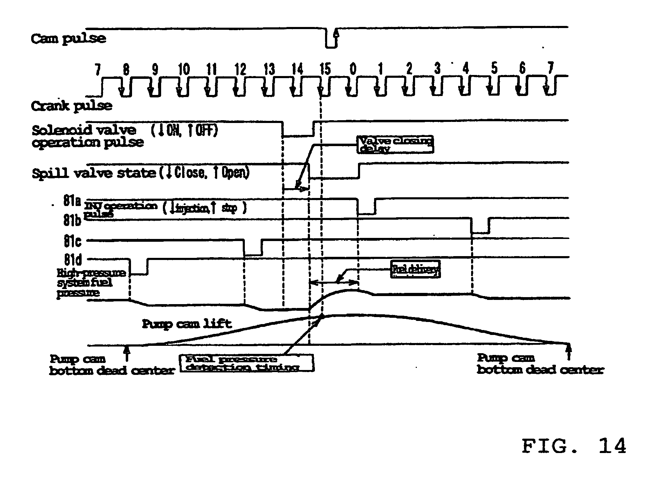

FIG. 14 is a diagram for showing change in fuel pressure in the pressure accumulation chamber 127 about time and timings of fuel pressure detections. As shown in FIG. 14, in the fourth embodiment, fuel pressure is detected by the fuel pressure sensor 74 at a timing that a crank pulse (15) is generated. The crank pulse (15) is a crank pulse generated at a general center of a period of fuel discharge by the high-pressure pump 123. As such, fuel pressure is detected at a general center of a period that fuel pressure largely rises, and thereby fuel pressure approximately equal to the case of the first embodiment that an average value of fuel pressure at two points before and after the period is an average fuel pressure.

In the fourth embodiment, the process mentioned above that an instantaneous value of fuel pressure is read out is made instead of the process of step S260 in the injection pulse width computation process in FIG. 8. Also, a process that an instantaneous value of fuel pressure is read out is made instead of the process of step S510 in the fuel pressure control process in FIG. 10. In the fourth embodiment also, similarly to the case of the first embodiment, it realizes an effect that a combustion condition is improved in transient operation of the engine.

In the first through fourth embodiments described above, a timing that the ECU 100 inputs a crank pulse and a timing that the ECU 100 outputs an operation pulse provided to the solenoid valve 123d are used as a timing of fuel pressure detection. However, a timing of fuel pressure detection is not limited to those modes, but a timing of input or output of each kind of signal (pulse) by the ECU 100 can be used as a timing of fuel pressure detection. For example, a timing shown in FIG. 6 that an operation pulse is output to the in-cylinder injector 189 may be a timing of fuel pressure detection. A timing that each kind of pulse input or output by the ECU 100 rises may be a timing of a detection also, and a timing that a pulse falls may be a timing of a detection.

In the first through fourth embodiments, an injection pulse width is calculated based on fuel pressure detected by the fuel pressure sensor 74 at a predetermined timing of fuel pressure detection. However, in the present invention, fuel pressure is detected by the fuel pressure sensor 74 every predetermined period (for example, every 0.2 ms), and an injection pulse width may be computed by using the newest fuel pressure at a predetermined timing (the fuel pressure detected by the fuel pressure sensor 74). The predetermined timing is not limited to a specific timing, but, similarly to the timing of fuel pressure detection, can be a timing that the ECU 100 inputs a crank pulse, a timing that the ECU 100 outputs an operation pulse provided to the solenoid valve 123d, a timing that an operation pulse is output to the in-cylinder injector 189, and so forth. Also, other than such cases, a timing that each kind of pulse that the ECU 100 inputs or outputs is input or output can be the predetermined timing. Further, a timing that said each kind of pulse rises may be the predetermined timing, and a timing that the pulse falls may be the predetermined timing.

There has been described a fuel injection control device for enabling an improvement of combustion in a transient operation of the engine with improvement of combustion in normal operation at a high engine speed. An average fuel pressure calculating period for detecting fuel pressure for calculating an average fuel pressure is set to a period shorter than a cycle of a high-pressure pump. An average value of fuel pressure detected in the average fuel pressure calculating period is calculated as average fuel pressure. Calculated average fuel pressure is used in computing an injection pulse width of an in-cylinder injector relating to each of four cylinders.

DESCRIPTION OF REFERENCE NUMERALS AND SYMBOLS

10: motorcycle (straddle type vehicle)
29: engine
41: handlebars
41R: right grip
42: accelerator input sensor
46: throttle valve
47: throttle
49: throttle actuator
50: throttle opening sensor
52: crankshaft
53: engine speed sensor (crank pulse generating device)
71: water temperature sensor
72: atmospheric pressure sensor
73: intake air temperature sensor
74: a fuel pressure sensor (fuel pressure detection device)
81 (81a through 81d): cylinder
90: intake pipe pressure sensor
100: ECU (fuel injection control device)
101: CPU
102: RAM
106: ROM
123: high-pressure pump (fuel pump)
123d: solenoid valve (actuator)
123e: spill valve (control valve)
189: in-cylinder injector
P1, P2, Pt: detected fuel pressure
Pm: average fuel pressure
Pn: weighted average of fuel pressure
Po: target fuel pressure
Pn' (old): average fuel pressure calculated at previous time

Pn' (new): average fuel pressure at present time
S100 through S140: average fuel pressure calculation process (average fuel pressure calculating means)
S200 through S360: injection pulse width computation process (injection pulse width computing means)
S500 through S590: fuel pressure control process (fuel pressure controlling means)

**Claims**

1. A fuel injection control device (100) for an engine (29) including a cylinder (81a, 81b, 81c, 81d), an in-cylinder injector (189) for injecting fuel into the cylinder, a fuel pump (123) for supplying fuel to the in-cylinder injector, and a fuel pressure detection device (74) for detecting fuel pressure acting on the in-cylinder injector, an injection pulse width computing means for computing an injection pulse width of the in-cylinder injector being operable to compute an injection pulse width based on fuel pressure detected by the fuel pressure detection device at a timing during the operation period of the fuel pump shorter than an operation cycle of the pump which is the period that the pump cam moves from a bottom dead center and thereafter returns to a top dead center.

2. A fuel injection control device as claimed in claim 1, further comprising average fuel pressure calculating means for calculating average fuel pressure from a plurality of fuel pressure detections made by the fuel pressure detection device, wherein the plurality of fuel pressure detections are made in a period shorter than the operation cycle of the fuel pump, the calculated average fuel pressure being for the injection pulse width computing means to compute an injection pulse width based on the average fuel pressure calculated.

3. The fuel injection control device according to claim 2, further comprising fuel pressure controlling means for feedback control of fuel pressure so that fuel pressure acting on the in-cylinder injector is a predetermined target fuel pressure, the fuel pressure controlling means being operable to provide feedback control based on the average fuel pressure calculated by the average fuel pressure calculating means.

4. The fuel injection control device according to claim 2 or 3, wherein the average fuel pressure calculating means is operable to calculate a weighted average based on the plurality of fuel pressure detections made by the fuel pressure detection device.

5. The fuel injection control device according to claim 2 or 3, wherein the average fuel pressure calculating means is operable to calculate average fuel pressure at a present time in a manner such that a sum of average fuel pressure calculated at a previous time and fuel pressure detected at a present time is divided by two.

6. The fuel injection control device according to claim 2 or 3, wherein the average fuel pressure calculating means is operable to calculate average fuel pressure from the plurality of fuel pressure detections made by the fuel pressure detection device in periods before and after discharge of fuel by the fuel pump.

7. The fuel injection control device according to claim 6, wherein the average fuel pressure calculating means is operable to calculate average fuel pressure in a manner such that a sum of a first fuel pressure detected by the fuel pressure detection device a predetermined period before fuel is discharged by the fuel pump and a second fuel pressure detected by the fuel pressure detection device a predetermined period after the discharge is made is divided by two.

8. The fuel injection control device according to claim 7, in which the engine includes a crankshaft, and a crank pulse generating device for generating a crank pulse every predetermined angle rotation of the crankshaft,
the fuel pump includes a control valve operated by an actuator,
the first fuel pressure is detected at a timing that a control valve operation pulse for operating the control valve is generated, and
the second fuel pressure is detected at a timing that the crank pulse generating device generates a crank pulse.

9. The fuel injection control device according to any preceding claim, in which the engine is a multi-cylinder engine including a plurality of the cylinders, and the injection pulse width computing means is operable to use average fuel pressure calculated by the average fuel pressure calculating means in computing injection pulse widths relating to at least two cylinders among the plurality of the cylinders.

10. The fuel injection control device according to claim 9, in which the injection pulse computing means is operable to use average fuel pressure calculated by the average fuel pressure calculating means in computing injection pulse widths relating to all the plurality of the cylinders.

11. The fuel injection control device according to claim 9, in which the engine is a four-cylinder engine including four said cylinders.

12. The fuel injection control device according to any preceding claim, in which the engine includes a crankshaft, and a crank pulse generating device for generating a crank pulse by every predetermined angle rotation of the crankshaft, and a timing that the fuel pressure detection device detects fuel pressure is a timing that the crank pulse generating device generates a crank pulse.

13. The fuel injection control device according to any preceding claim in which the fuel pump includes a control valve operated by an actuator, and a timing that the fuel pressure detection device detects fuel pressure is a timing that a control valve operation pulse for operating the control valve is generated.

14. The fuel injection control device according to any preceding claim, wherein a timing that the fuel pressure detection device detects fuel pressure is a timing that an injector operation pulse for operating the in-cylinder injector is generated.

15. The fuel injection control device according to any preceding claim in which the fuel pressure detection device detects fuel pressure in every predetermined period, and the injection pulse width computing means uses the newest fuel pressure at a predetermined timing in computing an injection pulse width.

16. The fuel injection control device according to claim 15, in which the engine includes a crankshaft, and a crank pulse generating device for generating a crank pulse every predetermined angle rotation of the crankshaft, and the predetermined timing is a timing that the crank pulse generating device generates a crank pulse.

17. The fuel injection control device according to claim 15 or claim 16 in which the fuel pump includes a control valve operated by an actuator, and the predetermined timing is a timing that a control valve operation pulse for operating the control valve is generated.

18. The fuel injection control device according to claim 15 in which the predetermined timing is a timing that an injector operation pulse for operating the in-cylinder injector is generated.

19. An engine comprising the fuel injection control device according to any preceding claim.

20. A straddle type vehicle comprising the engine according to claim 19.

21. The straddle type vehicle according to claim 20, which is a motorcycle.

22. A method of controlling fuel injection for an engine (29) including a cylinder (81 a, 81b, 81c, 81d), an in-cylinder injector (189) for injecting fuel into the cylinder, a fuel pump (123) for supplying fuel to the in-cylinder injector, and a fuel pressure detection device for detecting fuel pressure acting on the in-cylinder injector, and having injection pulse width computing means for computing an injection pulse width of the in-cylinder injector,
the method comprising calculating average fuel pressure from a plurality of fuel pressure detections made by the fuel pressure detection device, wherein the plurality of fuel pressure detections are made during the operating period of the fuel pump in a period shorter than an operation cycle of the fuel ump, which is the period that the pump cam moves from a bottom dead center to a top dead centre and thereafter returns to a bottom dead center, the calculated average fuel pressure being used by the injection pulse width computing means to compute an injection pulse width based on the average fuel pressure calculated.

**Patentansprüche**

1. Kraftstoffeinspritz- Steuerungsvorrichtung (100) für eine Brennkraftmaschine (29), enthaltend einen Zylinder (81 a, 81 b, 81 c, 81 d), einen In- Zylinder- Einspritzer (189) zum Einspritzen von Kraftstoff in den Zylinder, eine Kraftstoffpumpe (123) zum Zuführen von Kraftstoff zu dem In- Zylinder- Einspritzer und eine Kraftstoffdruck- Erfassungsvorrichtung (74) zum Erfassen des Kraftstoffdruckes, der auf den In- Zylinder- Einspritzer wirkt, eine Einspritzimpulsbreiten- Berechnungseinrichtung zum Berechnen einer Einspritzimpulsbreite des In- Zylinder- Einspritzers, betätigbar, um eine Einspritzimpulsbreite auf der Grundlage des Kraftstoffdruckes, erfasst durch die Kraftstoffdruck- Erfassungsvorrichtung zu einem Zeitpunkt zu berechnen, während dem die Arbeitsdauer der Kraftstoffpumpe kürzer als ein Arbeitstakt der Pumpe ist, die die Dauer ist, dass sich der Pumpennocken von einem unteren Totpunkt bewegt und danach zu einem oberen Totpunkt zurückkehrt.

2. Kraftstoffeinspritz- Steuerungsvorrichtung nach Anspruch 1, außerdem aufweisend eine durchschnittlicher Kraftstoffdruck- Berechnungseinrichtung zum Berechnen des durchschnittlichen Kraftstoffdruckes aus einer Mehrzahl von Kraftstoffdruckerfassungen, vorgenommen durch die Kraftstoffdruck- Erfassungsvorrichtung, wobei die Mehrzahl von Kraftstoffdruckerfassungen in einer Zeitdauer vorgenommen werden, die kürzer als der Arbeitstakt der Kraftstoffpumpe ist, wobei der berechnete durchschnittliche Kraftstoffdruck für die Einspritzimpulsbreiten-Berechnungseinrichtung dient, um eine Einspritzimpulsbreite auf der Grundlage des berechneten durchschnittlichen Kraftstoffdruckes zu berechnen.

3. Kraftstoffeinspritz- Steuerungsvorrichtung nach Anspruch 2, außerdem aufweisend eine Kraftstoffdruck- Steuerungseinrichtung zur Rückkopplungssteuerung des Kraftstoffdruckes, so dass der Kraftstoffdruck, der an dem In- Zylinder- Einspritzer wirkt, ein vorbestimmter Ziel- Kraftstoffdruck ist, wobei die Kraftstoffdruck-Steuerungseinrichtung betätigbar ist, eine Rückkopplungssteuerung auf der Grundlage des durchschnittlichen Kraftstoffdruckes, berechnet durch die durchschnittlicher Kraftstoffdruck- Berechnungseinrichtung.

4. Kraftstoffeinspritz- Steuerungsvorrichtung nach Anspruch 2 oder 3, wobei die durchschnittlicher Kraftstoffdruck-Berechnungseinrichtung betätigbar ist, einen gewichteten Durchschnitt auf der Grundlage der Mehrzahl von Kraftstoffdruckerfassungen, vorgenommen durch die Kraftstoffdruck- Erfassungsvorrichtung, zu berechnen.

5. Kraftstoffeinspritz- Steuerungsvorrichtung nach Anspruch 2 oder 3, wobei die durchschnittlicher Kraftstoffdruck-Berechnungseinrichtung betätigbar ist, den durchschnittlichen Kraftstoffdruck bei einer momentanen Zeit derart zu berechnen derart, dass eine Summe des durchschnittlichen Kraftstoffdrucks, berechnet bei einer vorherigen Zeit und der Kraftstoffdruck, berechnet bei einer momentanen Zeit, durch zwei ist geteilt ist.

6. Kraftstoffeinspritz- Steuerungsvorrichtung nach Anspruch 2 oder 3, wobei die durchschnittlicher Kraftstoffdruck-Berechnungseinrichtung betätigbar ist, den durchschnittlichen Kraftstoffdruck aus einer Mehrzahl von Kraftstoffdruckerfassungen, vorgenommen durch die Kraftstoffdruck- Erfassungsvorrichtung in Zeiträumen vor und nach der Abgabe von Kraftstoff durch die Kraftstoffpumpe, zu berechnen.

7. Kraftstoffeinspritz- Steuerungsvorrichtung nach Anspruch 6, wobei die durchschnittlicher Kraftstoffdruck- Berechnungseinrichtung betätigbar ist, den durchschnittlichen Kraftstoffdruck in einer derartigen Weise zu berechnen, dass eine Summe eines ersten Kraftstoffdruckes, erfasst durch die Kraftstoffdruck- Erfassungsvorrichtung, eine vorbestimmte Zeitdauer bevor der Kraftstoff durch die Kraftstoffpumpe abgegeben wird, und ein zweiter Kraftstoffdruck, erfasst durch die Kraftstoffdruck- Erfassungsvorrichtung, eine vorbestimmte Zeitdauer nachdem die Abgabe vorgenommen ist, durch zwei geteilt wird.

8. Kraftstoffeinspritz- Steuerungsvorrichtung nach Anspruch 7, bei der die Brennkraftmaschine eine Kurbelwelle und eine Kurbelimpuls- Erzeugungsvorrichtung zum Erzeugen eines Kurbelimpulses jede vorbestimmte Winkeldrehung der Kurbelwelle enthält,
die Kraftstoffpumpe ein Steuerventil, betätigt durch einen Betätiger, enthält,
wobei der erste Kraftstoffdruck zu einem Zeitpunkt erfasst wird, zu dem ein Steuerventil- Betätigungsimpuls zum Betätigen des Steuerventils erzeugt wird, und der zweite Kraftstoffdruck zu einem Zeitpunkt erfasst wird, zu dem die Kurbelimpuls- Erzeugungsvorrichtung einen Kurbelimpuls erzeugt.

9. Kraftstoffeinspritz- Steuerungsvorrichtung nach einem vorhergehenden Ansprüche, bei der die Brennkraftmaschine eine Mehrzylinder- Brennkraftmaschine ist, die eine Mehrzahl von Zylindern enthält, und die Einspritzimpulsbreiten-Berechnungseinrichtung betätigbar ist, einen durchschnittlichen Kraftstoffdruck zu verwenden, berechnet durch die durchschnittliche Kraftstoffdruck- Berechnungseinrichtung im Berechnen von Einspritzimpulsbreiten in Bezug auf zumindest zwei Zylinder unter der Mehrzahl von Zylindern.

10. Kraftstoffeinspritz- Steuerungsvorrichtung nach Anspruch 9, in der die Einspritzimpuls- Berechnungseinrichtung betätigbar ist, den durchschnittlichen Kraftstoffdruck, berechnet durch die durchschnittlicher Kraftstoffdruck- Berechnungseinrichtung, bei Berechnen von Einspritzimpulsbreiten in Bezug auf alle der Mehrzahl von Zylindern, zu verwenden.

**11.** Kraftstoffeinspritz- Steuerungsvorrichtung nach Anspruch 9, bei der die Brennkraftmaschine ein Vierzylinder- Motor ist, der vier Zylinder enthält.

**12.** Kraftstoffeinspritz- Steuerungsvorrichtung nach einem der vorhergehenden Ansprüche, bei der die Brennkraftmaschine eine Kurbelwelle enthält, und eine Kurbelimpuls- Erzeugungsvorrichtung zum Erzeugen eines Kurbelimpulses bei jeder vorbestimmten Winkeldrehung der Kurbelwelle, und wobei ein Zeitpunkt, zu dem die Kraftstoffdruck- Erfassungsvorrichtung einen Kraftstoffdruck erfasst, ein Zeitpunkt ist, bei dem die Kurbelimpuls- Erzeugungsvorrichtung einen Kurbelimpuls erzeugt.

**13.** Kraftstoffeinspritz- Steuerungsvorrichtung nach einem der vorhergehenden Ansprüche, bei der die Kraftstoffpumpe ein Steuerventil, betätigt durch einen Betätiger, enthält, und wobei ein Zeitpunkt, zu dem die Kraftstoffdruck- Erfassungsvorrichtung den Kraftstoffdruck erfasst, ein Zeitpunkt ist, bei dem ein Steuerventil-Betätigungsimpuls zum Betätigen des Steuerventils erzeugt wird.

**14.** Kraftstoffeinspritz- Steuerungsvorrichtung nach einem der vorhergehenden Ansprüche, wobei ein Zeitpunkt, zu dem die Kraftstoffdruck- Erfassungsvorrichtung den Kraftstoffdruck erfasst, ein Zeitpunkt ist, bei dem ein Einspritzbetätigungsimpuls zum Betätigen des In- Zylinder- Einspritzers erzeugt wird.

**15.** Kraftstoffeinspritz- Steuerungsvorrichtung nach einem der vorhergehenden Ansprüche, bei der die Kraftstoffdruck-Erfassungsvorrichtung den Kraftstoffdruck in jedem vorbestimmten Zeitraum erfasst und die Einspritzimpulsbreiten-Berechnungseinrichtung den neuesten Kraftstoffdruck bei einem vorbestimmten Zeitpunkt beim Berechnen einer Einspritzimpulsbreite verwendet.

**16.** Kraftstoffeinspritz- Steuerungsvorrichtung nach Anspruch 15, bei der die Brennkraftmaschine eine Kurbelwelle enthält und eine Kurbelimpuls- Erzeugungsvorrichtung zum Erzeugen eines Kurbelimpulses jeder vorbestimmter Winkeldrehung der Kurbelwelle, und wobei der vorbestimmte Zeitpunkt ein Zeitpunkt ist, bei dem die Kurbelimpuls-Erzeugungsvorrichtung einen Kurbelimpuls erzeugt.

**17.** Kraftstoffeinspritz- Steuerungsvorrichtung nach Anspruch 15 oder Anspruch 16, bei der die Kraftstoffpumpe ein Steuerventil, betätigt durch einen Betätiger, enthält und der vorbestimmte Zeitpunkt ein Zeitpunkt ist, bei dem ein Steuerventil-Betätigungsimpuls zum Betätigen des Steuerventils erzeugt wird.

**18.** Kraftstoffeinspritz- Steuerungsvorrichtung nach Anspruch 15, bei der der vorbestimmte Zeitpunkt ein Zeitpunkt ist, bei dem ein Einspritzbetätigungsimpuls zum betätigen des In- Zylinder- Einspritzers erzeugt wird.

**19.** Brennkraftmaschine, aufweisend die Kraftstoffdruck- Steuerungseinrichtung nach einem vorhergehenden Anspruch.

**20.** Fahrzeug vom Grätschsitz- Typ, aufweisend die Brennkraftmaschine nach Anspruch 19.

**21.** Fahrzeug vom Grätschsitz- Typ nach Anspruch 20, das ein Motorrad ist.

**22.** Verfahren zum Steuern einer Kraftstoffeinspritzung für eine Brennkraftmaschine (29), enthaltend einen Zylinder (81 a, 81 b, 81 c, 81 d), einen In- Zylinder- Einspritzer (189) zum Einspritzen von Kraftstoff in den Zylinder, eine Kraftstoffpumpe (123) zum Zuführen von Kraftstoff zu dem In- Zylinder- Einspritzer und eine Kraftstoffdruck- Erfassungsvorrichtung zum Erfassen des Kraftstoffdruckes, der auf den In- Zylinder- Einspritzer wirkt, und mit einer Einspritzimpulsbreiten- Berechnungseinrichtung zum Berechnen einer Einspritzimpulsbreite des In- Zylinder-Einspritzers, wobei das Verfahren aufweist das Berechnen des durchschnittlichen Kraftstoffdruckes aus einer Mehrzahl von Kraftstoffdruckerfassungen, vorgenommen durch die Kraftstoffdruck- Erfassungsvorrichtung, wobei die Mehrzahl der Kraftstoffdruckerfassungen während des Betätigungszeitraumes der Kraftstoffpumpe in einem Zeitraum kürzer als ein Arbeitstakt der Kraftstoffpumpe vorgenommen werden, der der Zeitraum ist, in dem sich der Pumpennocken von einem unteren Totpunkt zu einem oberen Totpunkt bewegt und danach zu einem unteren Totpunkt zurückkehrt, wobei der berechnete durchschnittliche Kraftstoffdruck durch die Einspritzimpulsbreiten- Berechnungseinrichtung verwendet wird, um eine Einspritzimpulsbreite auf der Grundlage des berechneten durchschnittlichen Kraftstoffdruckes zu berechnen.

**Revendications**

1.  Dispositif de commande d'injection de carburant (100) pour un moteur (29) comprenant un cylindre (81a, 81b, 81c, 81d), un injecteur interne (189) pour injecter du carburant dans le cylindre, une pompe à carburant (123) pour amener du carburant dans l'injecteur interne, et un dispositif de détection de pression de carburant (74) pour détecter la pression de carburant agissant sur ledit injecteur interne, un moyen de calcul automatisé de largeur d'impulsion d'injection destiné au calcul automatisé d'une largeur d'impulsion d'injection de l'injecteur interne étant apte à fonctionner pour le calcul automatisé d'une largeur d'impulsion d'injection sur la base de la pression de carburant détectée par le dispositif de détection de pression de carburant à un certain rythme pendant la période de fonctionnement de la pompe à carburant qui est plus courte qu'un cycle de fonctionnement de la pompe, constitué par la période pendant laquelle la came de pompe se déplace à partir d'un point mort bas et revient ensuite à un point mort haut.

2.  Dispositif de commande d'injection de carburant tel que revendiqué dans la revendication 1, comprenant par ailleurs un moyen de calcul de pression de carburant moyenne pour calculer une pression de carburant moyenne à partir de plusieurs détections de pression de carburant faites par le dispositif de détection de pression de carburant, étant précisé que lesdites détections de pression de carburant sont faites pendant une période plus courte que le cycle de fonctionnement de la pompe à injection, la pression de carburant moyenne calculée étant destinée au moyen de calcul automatisé de largeur d'impulsion d'injection, pour le calcul automatisé d'une largeur d'impulsion d'injection sur la base de la pression de carburant moyenne calculée.

3.  Dispositif de commande d'injection de carburant selon la revendication 2, comprenant par ailleurs un moyen de commande de pression de carburant pour une commande à rétroaction de la pression de carburant de telle sorte que la pression de carburant agissant sur l'injecteur interne soit une pression de carburant cible prédéterminée, le moyen de commande de pression de carburant étant apte à fonctionner pour fournir une commande à rétroaction sur la base de la pression de carburant moyenne calculée par le moyen de calcul de pression de carburant moyenne.

4.  Dispositif de commande d'injection de carburant selon la revendication 2 ou 3, étant précisé que le moyen de calcul de pression de carburant moyenne est apte à fonctionner pour calculer une moyenne pondérée sur la base des détections de pression de carburant faites par le dispositif de détection de pression de carburant.

5.  Dispositif de commande d'injection de carburant selon la revendication 2 ou 3, étant précisé que le moyen de calcul de pression de carburant moyenne est apte à fonctionner pour calculer la pression de carburant moyenne à un moment présent de telle sorte qu'une somme d'une pression de carburant moyenne calculée à un moment précédent et d'une pression de carburant détectée à un moment présent soit divisée par deux.

6.  Dispositif de commande d'injection de carburant selon la revendication 2 ou 3, étant précisé que le moyen de calcul de pression de carburant moyenne est apte à fonctionner pour calculer une pression de carburant moyenne à partir des détections de pression de carburant faites par le dispositif de détection de pression de carburant pendant des périodes précédant et suivant la décharge de carburant par la pompe à carburant.

7.  Dispositif de commande d'injection de carburant selon la revendication 6, étant précisé que le moyen de calcul de pression de carburant moyenne est apte à fonctionner pour calculer la pression de carburant moyenne de telle sorte qu'une somme d'une première pression de carburant détectée par le dispositif de détection de pression de carburant pendant une période prédéterminée précédant le moment où le carburant est déchargé par la pompe à carburant, et d'une seconde pression de carburant détectée par le dispositif de détection de pression de carburant pendant une période prédéterminée suivant le moment où la décharge est faite, soit divisée par deux.

8.  Dispositif de commande d'injection de carburant selon la revendication 7, dans lequel le moteur comprend un vilebrequin et un dispositif générateur d'impulsions de vilebrequin pour générer une impulsion de vilebrequin à chaque rotation angulaire prédéterminée du vilebrequin,
    la pompe à carburant comprend une soupape de commande actionnée par un actionneur,
    la première pression de carburant est détectée à un rythme selon lequel est générée une impulsion d'actionnement de soupape de commande pour l'actionnement de la soupape de commande, et
    la seconde pression de carburant est détectée à un rythme selon lequel le dispositif générateur d'impulsions de vilebrequin génère une impulsion de vilebrequin.

9.  Dispositif de commande d'injection de carburant selon l'une quelconque des revendications précédentes, dans lequel le moteur est un moteur multicylindre qui comprend plusieurs cylindres, et le moyen de calcul automatisé de largeur d'impulsion d'injection est apte à fonctionner pour utiliser la pression de carburant moyenne calculée par le moyen de calcul de pression de carburant moyenne, dans le calcul automatisé des largeurs d'impulsion d'injection relatives à au moins deux cylindres, parmi les cylindres.

10. Dispositif de commande d'injection de carburant selon la revendication 9, dans lequel le moyen de calcul automatisé d'impulsions d'injection est apte à fonctionner pour utiliser la pression de carburant moyenne calculée par le moyen de calcul de pression de carburant moyenne, dans le calcul automatisé des largeurs d'impulsion d'injection relatives à tous les cylindres.

11. Dispositif de commande d'injection de carburant selon la revendication 9, dans lequel le moteur est un moteur à quatre cylindres comprenant quatre cylindres.

12. Dispositif de commande d'injection de carburant selon l'une quelconque des revendications précédentes, dans lequel le moteur comprend un vilebrequin, et un dispositif générateur d'impulsions de vilebrequin pour générer une impulsion de vilebrequin à chaque rotation angulaire prédéterminée du vilebrequin, et un rythme selon lequel le dispositif de détection de pression de carburant détecte la pression de carburant est un rythme selon lequel le dispositif générateur d'impulsions de vilebrequin génère une impulsion de vilebrequin.

13. Dispositif de commande d'injection de carburant selon l'une quelconque des revendications précédentes, dans lequel la pompe à carburant comprend une soupape de commande actionnée par un actionneur, et un rythme selon lequel le dispositif de détection de pression de carburant détecte la pression de carburant est un rythme selon lequel est générée une impulsion d'actionnement de soupape de commande pour l'actionnement de la soupape de commande.

14. Dispositif de commande d'injection de carburant selon l'une quelconque des revendications précédentes, étant précisé qu'un rythme selon lequel le dispositif de détection de pression de carburant détecte la pression de carburant est un rythme selon lequel est générée une impulsion d'actionnement d'injecteur pour l'actionnement de l'injecteur interne.

15. Dispositif de commande d'injection de carburant selon l'une quelconque des revendications précédentes, dans lequel le dispositif de détection de pression de carburant détecte la pression de carburant dans chaque période prédéterminée, et le moyen de calcul automatisé de largeur d'impulsion d'injection utilise la pression de carburant la plus récente selon un rythme prédéterminé, dans le calcul automatisé d'une largeur d'impulsion d'injection.

16. Dispositif de commande d'injection de carburant selon la revendication 15, dans lequel le moteur comprend un vilebrequin et un dispositif générateur d'impulsions de vilebrequin pour générer une impulsion de vilebrequin à chaque rotation angulaire prédéterminée du vilebrequin, et le rythme prédéterminé est un rythme selon lequel le dispositif générateur d'impulsions de vilebrequin génère une impulsion de vilebrequin.

17. Dispositif de commande d'injection de carburant selon la revendication 15 ou la revendication 16, dans lequel la pompe à carburant comprend une soupape de commande actionnée par un actionneur, et le rythme prédéterminé est un rythme selon lequel est générée une impulsion d'actionnement de soupape de commande pour l'actionnement de la soupape de commande.

18. Dispositif de commande d'injection de carburant selon la revendication 15, dans lequel le rythme prédéterminé est un rythme selon lequel est générée une impulsion d'actionnement d'injecteur pour l'actionnement de l'injecteur interne.

19. Moteur comprenant le dispositif de commande d'injection de carburant selon l'une quelconque des revendications précédentes.

20. Véhicule du type à enfourcher comprenant le moteur selon la revendication 19.

21. Véhicule du type à enfourcher selon la revendication 20, qui est constitué par un motocycle.

22. Procédé pour commander l'injection de carburant pour un moteur (29) comprenant un cylindre (81a, 81b, 81c, 81d), un injecteur interne (189) pour injecter du carburant dans le cylindre, une pompe à carburant (123) pour amener du carburant dans l'injecteur interne, et un dispositif de détection de pression de carburant pour détecter la pression de carburant agissant sur ledit injecteur interne, et comportant un moyen de calcul automatisé de largeur d'impulsion d'injection pour le calcul automatisé d'une largeur d'impulsion d'injection de l'injecteur interne,

le procédé comprenant le calcul d'une pression de carburant moyenne à partir de plusieurs détections de pression de carburant faites par le dispositif de détection de pression de carburant, étant précisé que ces détections de pression de carburant sont faites pendant la période de fonctionnement de la pompe à carburant pendant une période plus courte qu'un cycle de fonctionnement de la pompe à carburant, constitué par la période pendant laquelle la came de pompe se déplace vers un point mort haut, à partir d'un point mort bas, et revient ensuite à un point mort bas, la pression de carburant moyenne calculée étant utilisée par le moyen de calcul automatisé de largeur d'impulsion d'injection pour le calcul automatisé d'une largeur d'impulsion d'injection sur la base de la pression de carburant moyenne calculée.

FIG. 1

FIG. 2

FIG. 3

130

**Sensor group**

| Accelerator input sensor | — 42 |

| Throttle opening sensor | — 50 |

| Engine speed sensor | — 53 |

| Main shaft rotational speed sensor | — 56 |

| Vehicle speed sensor | — 69 |

| Gear position sensor | — 70 |

| Water temperature sensor | — 71 |

| Atmospheric pressure sensor | — 72 |

| Intake air temperature sensor | — 73 |

FIG. 4

FIG. 5

FIG. 6

Average fuel pressure
calculation process

S100

NO ◄── Pump solenoid operation
signal output started?

YES

Detect fuel pressure P1 ── S110

S120

NO ◄── Crank pulse (1) input?

YES

Detect fuel pressure P2 ── S130

Calculate average fuel
pressure Pm ── S140
$$Pm=(P1+P2)/2$$

Return

FIG. 7

Injection pulse width
computation process

Input engine speed — S200

Input intake pipe
pressure — S210

Input throttle opening — S220

Input atmospheric
pressure — S230

Input intake air
temperature — S240

Input water temperature — S250

Read out average
fuel pressure — S260

Search first air
amount map (speed
density type) — S270

Search second air
amount map (throttle
speed type) — S280

Calculate inflow air
amount (final value)
(weighting process) — S290

1

FIG. 8

```
        ┌───┐
        │ 1 │
        └───┘
          │
          ▼
┌─────────────────────┐        S300
│ Correct atmospheric │
│ pressure            │
└─────────────────────┘
          │
          ▼
┌─────────────────────┐        S310
│ Correct intake air  │
│ temperature         │
└─────────────────────┘
          │
          ▼
┌─────────────────────┐        S320
│ Search air-fuel     │
│ ratio map           │
└─────────────────────┘
          │
          ▼
┌─────────────────────┐        S330
│ Calculate required  │
│ fuel amount         │
└─────────────────────┘
          │
          ▼
┌─────────────────────┐        S340
│ Calculate injection │
│ pulse width         │
└─────────────────────┘
          │
          ▼
┌─────────────────────┐        S350
│ Correct water       │
│ temperature         │
└─────────────────────┘
          │
          ▼
┌─────────────────────┐        S360
│ Correct ineffective │
│ period              │
└─────────────────────┘
          │
          ▼
      ╭─────────╮
      │   End   │
      ╰─────────╯
```

FIG. 9

```
        ┌──────────────────┐
        │ Fuel pressure    │
        │ control process  │
        └──────────────────┘
                 │
                 ▼
        ┌──────────────────┐        S500
        │ Input engine speed│
        └──────────────────┘
                 │
                 ▼
        ┌──────────────────┐        S510
        │ Read out average │
        │ fuel pressure    │
        └──────────────────┘
                 │
                 ▼
        ┌──────────────────┐        S520
        │ Read out required│
        │ fuel amount      │
        └──────────────────┘
                 │
                 ▼
        ┌──────────────────┐        S530
        │ Input throttle opening│
        └──────────────────┘
                 │
                 ▼
        ┌──────────────────┐        S540
        │ Calculate FF     │
        │                  │
        │ FF = Kf·Q        │
        └──────────────────┘
                 │
                 ▼
        ┌──────────────────┐        S550
        │ Obtain target fuel│
        │ pressure Po      │
        └──────────────────┘
                 │
                 ▼
        ┌──────────────────┐        S560
        │ Calculate pressure│
        │ deviation        │
        │ ΔP = Po−Pm       │
        └──────────────────┘
                 │
                 ▼
        ┌──────────────────┐        S570
        │ Calculated proportional│
        │ term DTp         │
        └──────────────────┘
                 │
                 ▼
   ┌────────────────────────────┐   S580
   │ Calculate integration term DTi│
   │                            │
   │ DTi (new) = DTi (old) + K2·ΔP│
   └────────────────────────────┘
                 │
                 ▼
   ┌────────────────────────────┐   S590
   │ Calculate injection pulse width DT│
   │                            │
   │ DT = Ka(FF+DTp+Dti)        │
   └────────────────────────────┘
                 │
                 ▼
          ┌──────────────┐
          │   Return     │
          └──────────────┘
```

FIG. 10

EP 1 972 770 B1

FIG. 11

30

Average fuel pressure
calculation process

S700

Timing for starting sampling? —— NO

YES

Sampling execution flag → ON —— S710

S720

YES —— Sampling execution flag = ON?

Detect fuel
pressure Pt —— S730

NO

Update weighted average Pn —— S740
Pn (new) = (2 × Pn (old) + Pt) / 3

S750

Timing for finishing sampling? —— NO

YES

Sampling execution flag → OFF —— S760

Return

FIG. 12

31

FIG. 14

Average fuel pressure
calculation process

S700

Timing for starting sampling? —— NO

YES

Sampling execution flag → ON —— S710

S720

YES

Sampling execution flag = ON?

Detect fuel
pressure Pt —— S730

NO

Update uniform average P′n —— S840
P n′ (new) = (P· n′ (old) + Pt) / 2

S750

Timing for finishing sampling? —— NO

YES

Sampling execution flag → OFF —— S760

Return

FIG. 13

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001164973 A
- US 20030070653 A
- JP 2000257478 A
- FR 2859763